# FASCICULE DE BREVET EUROPEEN

(11) **EP 1 954 600 B1**
(45) Date de publication et mention de la délivrance du brevet: **29.07.2009**
(21) Numéro de dépôt: 06831353.5
(22) Date de dépôt: 17.11.2006
(51) Int. Cl.: B65G 7/00

(54) **DISPOSITIF D'AIDE A LA ROTATION D'AU MOINS UN CONTENEUR**
HILFSVORRICHTUNG ZUM DREHEN MINDESTENS EINES BEHÄLTERS
AUXILIARY DEVICE FOR ROTATING AT LEAST ONE CONTAINER

(30) Priorité: 28.11.2005 FR 0512037
(43) Date de publication de la demande: 13.08.2008
(73) Titulaire: PEUGEOT CITROËN AUTOMOBILES S.A., 78140 Vélizy Villacoublay (FR)
(72) Inventeur: SAMOUR, Eric, F-91370 Verrieres Le Buisson (FR); SAMPEDRO, Angel, E-47007 Valladolid (ES)
(86) Numéro de dépôt international: PCT/FR2006/051191
(87) Numéro de publication internationale: WO 2007/060359

(56) Documents cités:
- DE-C1- 10 209 336

## Description

### Référence à une demande antérieure

Cette demande internationale revendique la priorité de la demande de brevet français, déposée le 28 novembre 2005, sous le n°05 12 037, dont l'ensemble de la description, des dessins et des revendications est incorporé par référence à la présente demande.

### Domaine technique

La présente invention concerne un dispositif d'aide à la rotation d'au moins un conteneur du type comprenant un plateau mobile par rapport à une embase, au moins un bras d'actionnement manuel lié au plateau, le bras comportant une branche d'actionnement

De tels dispositifs s'appliquent notamment sur les chaînes de fabrication pour l'approvisionnement de pièces ou accessoires au poste de travail d'un opérateur.

### Technique antérieure

Généralement, de tels dispositifs sont montés sur des roulettes, des roulements à billes ou coussins d'air qui aident l'opérateur à lutter contre la résistance au mouvement. Mais ces dispositifs ne disposent pas d'une assistance à la mise en mouvement et présentent donc l'inconvénient d'un manque d'ergonomie du poste de travail, souvent hors norme, notamment pour le déplacement de conteneurs lourds. En effet, pour deux conteneurs d'une tonne chacun disposés côte à côte, l'effort de décollement est généralement compris entre 11 et 15 daN et l'effort de maintien est généralement compris entre 8 et 11 daN. Or la limite de la norme ergonomique est fixée à 7,5 daN à deux mains.

II existe des dispositifs d'aide au mouvement avec système assistance à la mise en mouvement. Les systèmes d'assistance sont alors généralement à puissance pneumatique ou électrique et nécessitent donc une alimentation, un système de commande avec interface opérateur et une gestion de la sécurité.

Cependant, Ces dispositifs avec assistance présentent l'inconvénient d'être complexes et donc onéreux

### Exposé de l'invention

Le but de l'invention est de résoudre ce problème en apportant une solution plus simple et notamment sans alimentation électrique ou pneumatique.

A cet effet, l'invention a pour objet un dispositif d'aide à la rotation d'au moins un conteneur du type comprenant un plateau mobile par rapport à une embase, au moins un bras d'actionnement manuel lié au plateau, caractérisé en ce que l'embase comprend au moins un socle, le bras est articulé par rapport au plateau autour d'un axe, le bras comprend un organe formant levier, s'étendant sensiblement dans un plan transversal à l'axe, ledit organe formant levier étant solidaire en rotation du bras, et l'organe formant levier est propre à coopérer avec le socle formant appui dudit organe.

Suivant d'autres caractéristiques de l'invention :
- le socle comprend une rampe de décollement, l'organe formant levier étant adapté pour être déplacé entre une première position et une deuxième position angulaires décalées en coulissant le long de la rampe de décollement, en appui contre la rampe ;
- l'organe formant levier comprend à son extrémité un galet de décollement adapté pour coulisser le long du socle d'appui, en appui contre la rampe ;
- le bras comprend un pêne de verrouillage, l'embase comprend une gâche de coincement du pêne, le pêne étant déplaçable par rapport à l'embase entre une position engagée dans la gâche et une position escamotée hors de la gâche ;
- le bras comprend un ressort adapté pour presser le pêne de verrouillage vers la gâche de coincement du pêne ;
- le bras comprend des moyens de guidage du pêne par rapport l'embase adaptés pour permettre, par un mouvement de rotation du bras, le déplacement du pêne entre la position engagée dans la gâche et la position escamotée hors de la gâche ;
- le dispositif comprend un palier solidaire du plateau et dans lequel le bras est monté rotatif, et les moyens de guidage comprennent un pion de déverrouillage solidaire d'un premier élément parmi le palier et le pêne, et une surface de came délimitée dans le second élément parmi le palier et le pêne, le pion étant coulissant sur la surface de came ;
- le bras comprend un moyeu et une broche axiale, le moyeu étant solidaire de la branche d'actionnement du bras, rotatif dans le palier selon l'axe du bras et percé d'une fente rectiligne allongée s'étendant selon une génératrice parallèle à l'axe, la broche étant coulissante axialement dans le moyeu et solidaire du pêne de verrouillage, le pion de déverrouillage étant fixé sur la broche et faisant saillie radialement par la fente du moyeu ;
- le palier est adapté pour autoriser pour chaque position du plateau une position du bras d'actionnement repliée le long du plateau ;
- le bras est adapté pour permettre par un même mouvement de rotation, dans une première phase de la rotation, le déverrouillage du pêne; puis dans une deuxième phase de la rotation, le déplacement du plateau par rapport à l'embase ;
- le plateau de support comprend une butée d'appui du bras d'actionnement dans une position du bras écartée par rapport au plateau ;
- le plateau est rotatif selon un axe de rotation perpendiculaire au plan général du plateau ;
- le dispositif comprend deux bras d'actionnement manuel du plateau montés symétriques par rapport au plateau.

### Description sommaire des dessins

D'autres avantages et particularités de l'invention ressortent de la description de modes de réalisation faite ci-après en référence aux dessins annexés dans lesquels :
- la figure 1 est une vue d'ensemble en perspective du dispositif selon l'invention ;
- la figure 2 est une vue éclatée du premier bras d'actionnement et de la pièce supérieure du socle ;
- la figure 3 est une vue en coupe du dispositif, le pêne de verrouillage du bras étant enfoncé dans le socle ;
- la figure 4 est une vue en perspective du palier ;
- la figure 5 est une vue de face du tronçon cylindrique du palier ; et
- les figures 6A, 6B, 6C, 6D et 6E sont des vues schématiques de dessus décrivant le fonctionnement du dispositif,
- la figure 7 est une vue de profil du dispositif avec un opérateur du côté du socle, le premier bras d'actionnement étant verrouillé dans le socle, le second bras d'actionnement étant libre.

### Manière(s) de réaliser l'invention

Un dispositif d'aide à la rotation 1 sert à déplacer un ou plusieurs conteneurs le long d'une chaîne de montage pour l'approvisionnement de pièces ou accessoires au poste de travail d'un opérateur.

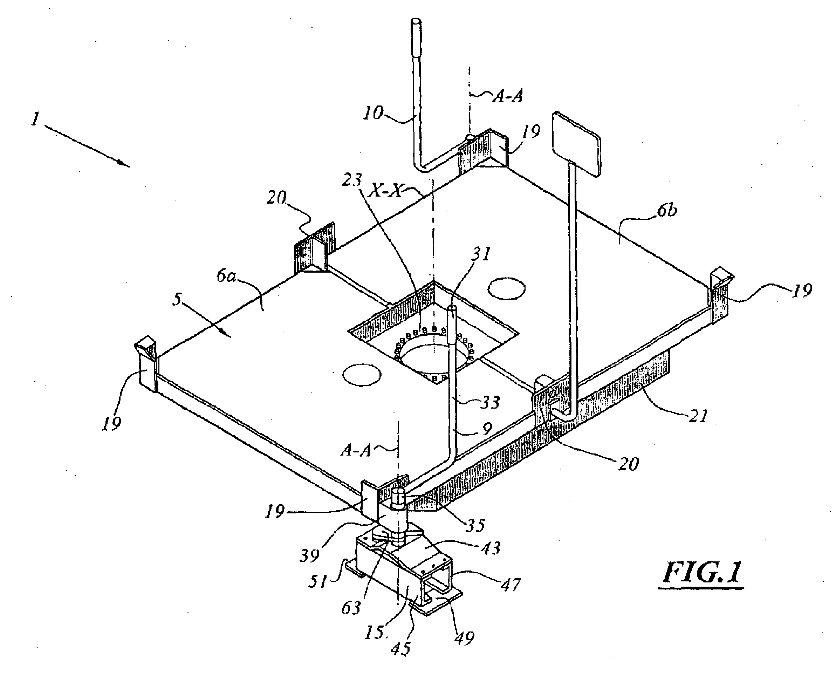

Le dispositif d'aide à la rotation 1 représenté sur la figure 1 comprend essentiellement un plateau 5 de support de deux conteneurs adjacents, un premier 9 et un deuxième 10 bras d'actionnement manuel et un socle 15.

Le plateau de support 5 est destiné dans l'exemple considéré à supporter deux conteneurs mis côte à côte. Les emplacements 6a, 6b des conteneurs sont définis par des coins 19 disposés aux angles du plateau 5 et des coins 20 disposés en vis-à-vis au milieu de deux bords latéraux du plateau 5. Les coins 19 comprennent deux parois, parallèles aux bords latéraux du plateau 5, liées chacune à l'une de leurs extrémités et faisant saillie du plateau 5. Les coins 20 comprennent deux parois solidaires, parallèles aux bords latéraux du plateau 5 et faisant saillie du plateau 5, la première paroi étant disposée dans le plan médian de la seconde de sorte à définir chacune deux coins en vis-à-vis des coins 19 correspondants.

Le plateau 5 est posé sur une embase 21 immobile par rapport au sol. Le plateau 5 est rotatif par rapport à l'embase 21 autour d'un axe de rotation XX perpendiculaire au plan général du plateau 5 et passant par le centre du plateau. La rotation du plateau 5 autour de son axe est assurée par un palier 23.

Chaque bras d'actionnement 9, 10 comprend essentiellement une poignée 31, un manche coudé 33 et un pivot vertical 35 formant liaison avec le plateau 5. Chaque pivot 35 est rotatif selon un axe de rotation A-A dans un palier 39 correspondant, solidaire du plateau 5 et fixé sur le bord d'un angle du plateau 5, sur un coin 19 ; les deux coins 19 correspondants étant opposés, c'est-à-dire symétriques par rapport à l'axe X-X. Ainsi, les deux bras d'actionnement manuel 9, 10 sont montés symétriques par rapport à l'axe de rotation du plateau.

Le socle 15 comprend essentiellement une pièce supérieure 43, deux poutres latérales 45 et 47 et deux plaques de fixation au sol 49 et 51.

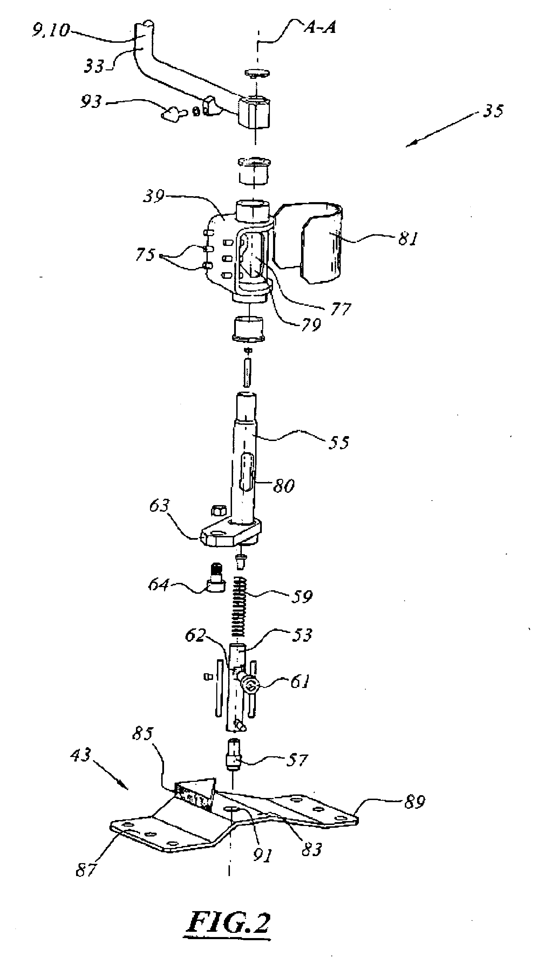

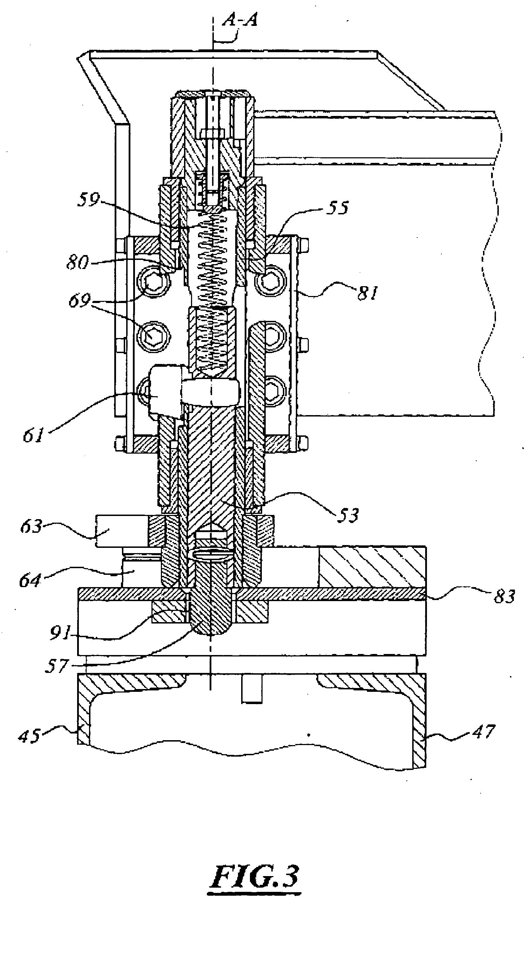

On voit sur les figures 2 et 3 le détail de la structure du pivot 35 d'un bras d'actionnement 9, 10. Le pivot 35 comprend essentiellement une broche axiale 53 et un moyeu 55. La broche 53 est montée coulissante axialement dans le moyeu 55, le moyeu 55 étant rotatif dans le palier 39 et solidaire du manche 33. Un pêne de verrouillage 57 est fixé à l'extrémité de la broche 53. Le pêne est pressé vers le bas par un ressort à spirales 59 monté entre la broche axiale 53 et le moyeu 55. Un pion 61 de déverrouillage du pêne est fixé perpendiculairement à l'axe du pivot, en dessous du ressort 59, sur la broche axiale 53 dans une lumière 62 prévue dans la pièce axiale. Le pion fait saillie radialement.

Un organe formant levier 63, par exemple une bielle de réaction est solidarisée depuis une de ses extrémités au moyeu 55. Elle s'étend radialement par rapport à l'axe du moyeu 55. Un galet 64 de décollement est fixé sur l'extrémité libre de la bielle 63.

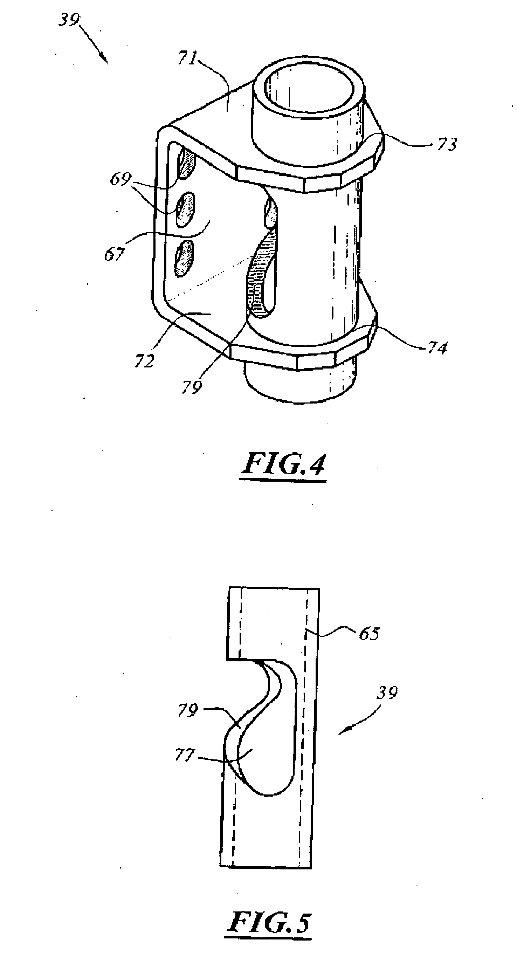

Le palier 39 (figures 4 et 5) comprend essentiellement un tronçon cylindrique 65 et une chape de support en U 67. Le tronçon cylindrique 65 est retenu entre les deux branches 71 et 72 de la chape. La chape 67 comprend sur sa partie centrale des ouvertures 69 adaptées pour insérer des vis 75 visibles sur la figure 2 de fixation du palier 39 au plateau de support 5.

Le moyeu 55 est rotatif dans le tronçon cylindrique 65 du palier, le diamètre intérieur du tronçon étant légèrement supérieur au diamètre extérieur du moyeu. Le tronçon cylindrique 65 est percé par une fenêtre 77 présentant une surface de came hélicoïdale 79 de guidage du pion de déverrouillage 61. Le pion de déverrouillage 61 et coulissant dans la fenêtre 77 du palier 39 en appui le long de la surface de came hélicoïdale 79.

Le moyeu 55 est percé d'une fente 80 rectiligne allongée s'étendant verticalement, selon une génératrice parallèle à l'axe A-A. Cette fente 80 est positionnée en regard d'une part de la fenêtre 77 du palier 39, et d'autre part de la lumière 62 de la broche axiale 53, de sorte que le pion de déverrouillage 61, fixé radialement sur la broche 53 dans la lumière 62 passe au travers de la fente 80 puis de la fenêtre 77.

Le palier 39 est fermé par un capot de protection 81 qui recouvre le tronçon cylindrique 65.

La pièce supérieure 43 du socle 15, visible sur la figure 2, comprend essentiellement une surface de verrouillage 83, une rampe de décollement 85 et deux pattes 87 et 89 de fixation de la pièce supérieure aux poutres latérales 45 et 47. Une gâche 91 de réception du pêne de verrouillage 57 est percée dans la surface de verrouillage 83. La gâche 91 circulaire, de diamètre légèrement supérieur à celui du pêne de verrouillage 57, est adaptée pour recevoir le pêne 57.

La rampe 85 fait saillie sur la surface de verrouillage et est délimitée par une face d'un prisme triangulaire régulier. La rampe de décollement 85 est adaptée pour servir d'appui au galet de décollement 64, le galet étant coulissant le long de la rampe 85.

Un plot 93 est fixé sur le manche 33 du bras d'actionnement 9 et forme une butée élastique d'arrêt du bras contre le plateau 5 quand le bras est replié le long du plateau.

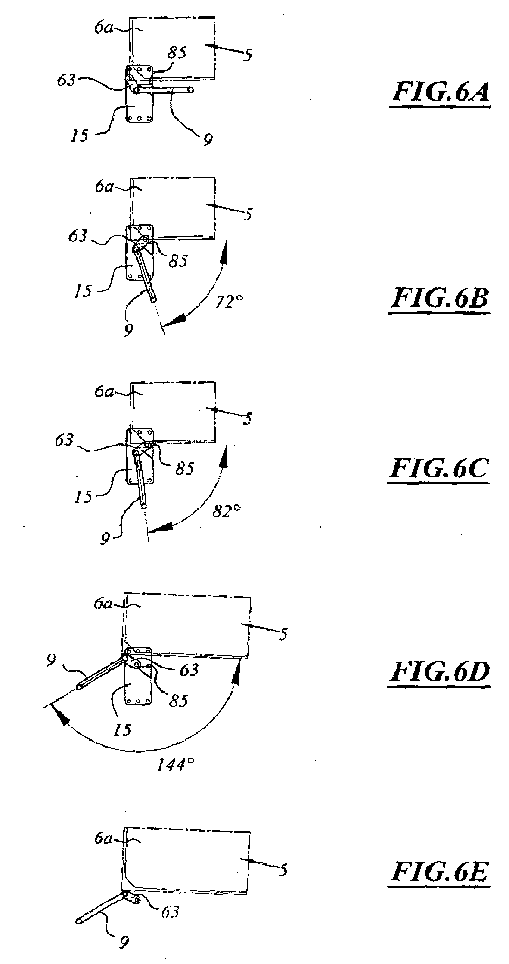

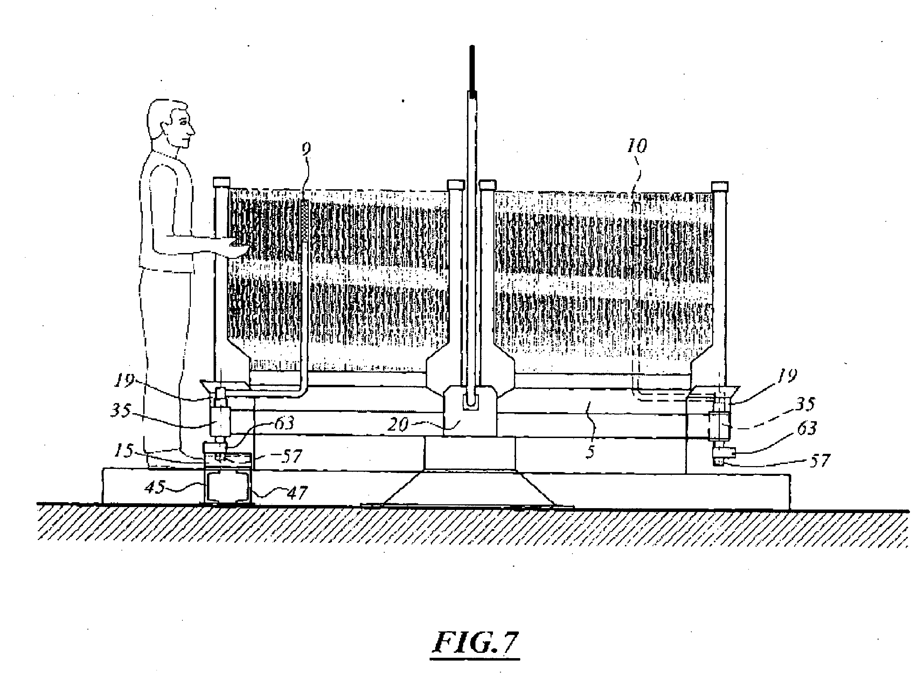

On décrira maintenant le fonctionnement du dispositif 1 en considérant les vues schématiques des figures 6A à 6E, et la figure 7.

La figure 6A montre la bielle de réaction 63 et le plateau 5 dans une position initiale. Le premier bras d'actionnement 9 est replié le long du plateau 5. Le ressort 59 maintient le pêne de verrouillage pressé vers le bas et coincé dans la gâche de verrouillage 91. Le dispositif est verrouillé. L'emplacement 6a de conteneur correspond au premier bras d'actionnement 9 verrouillé sur le socle 15, le second bras d'actionnement 10 étant libre. La figure 6A, représentant la position initiale, correspond à la figure 7 où l'on voit l'opérateur qui agit sur le premier bras d'actionnement 9 pour faire tourner le plateau 5 de sorte à permuter les emplacements 6a, 6b de conteneur. Le second bras 10 est alors replié le long du plateau 5 et libre.

La figure 6B montre le premier bras d'actionnement 9 faisant un angle de 72° avec le côté du plateau 5 et la bielle de réaction 63 étant dans une position intermédiaire. La rotation de l'axe du bras d'actionne ment de 0 à 72° entraîne la rotation du moyeu 55, solidaire du manche 33. Le pion de déverrouillage 61, en saillie de la fente 80 et solidaire de la broche 53, est entraîné en rotation par le bord latéral de la fente 80 du moyeu. De plus, le pion est guidé en rotation et verticalement vers le haut par la surface de came hélicoïdale 79 de la fenêtre 77.

La broche 53 coulisse axialement vers le haut dans le moyeu 55 et presse le ressort 59 vers le haut, débloquant le pêne de verrouillage 57 qui sort de la gâche de verrouillage 91. Le dispositif est déverrouillé.

La figure 6C montre une position du dispositif après une rotation supplémentaire du bras de 10°, le premier bras 9 faisant alors un angle de 82° avec le côté du plateau 5. Cette rotation du bras permet d'entraîner la bielle 63 dans une première position angulaire où le galet de décollement 64 vient en contact avec la rampe de décollement 85. Le galet 64 sert alors de point d'appui pour le premier bras d'actionnement 9, la bielle 63 constituant une branche de réaction du bras 9 qui exerce un effet de levier sur le plateau 5 en réaction contre la rampe 85 lors de la poursuite du mouvement de rotation du premier bras 9. C'est la position de décollement..

La figure 6D montre une position du dispositif avec le premier bras 9 faisant un angle de 144° avec le côté du plateau 5 et la bielle 63 étant dans une deuxième position angulaire. A partir de la position de décollement (figure 6C), le premier bras 9 fait levier contre la rampe de décollement 85 par la bielle de réaction 63 en contact avec le plateau de support 5 et qui pousse le plateau de support en le faisant tourner selon son axe de rotation X-X. Cette rotation permet d'amorcer ainsi le mouvement des conteneurs disposés aux emplacements 6a et 6b. Dans ce mouvement de rotation du premier bras 9, allant de 82° à 144° (figures 6C et 6D), le galet de décollement 64, en appui contre la rampe de décollement 85, coulisse le long de la rampe 85. C'est la phase de décollement.

Après la phase de décollement, le galet 64 s'échappe de la rampe de décollement 85 (figure 6E), et il n'y a donc plus d'appui du premier bras 9 contre la rampe. Dans cette position, le pion de déverrouillage 61 est alors en butée contre la chape 67 du palier 39 solidaire du plateau 5. Le premier bras 9 est donc en butée contre le plateau 5 et on peut pousser à deux mains le manche 33 du premier bras d'actionnement 9. Dans cette position, le manche 33 est espacé du plateau de support 5 et présente une distance supérieure à la distance le séparant initialement du plateau par rapport à l'axe de rotation du plateau, facilitant la continuation de la rotation du plateau de support 5.

Apres un demi-tour complet du plateau 5 autour de l'axe X-X, les emplacements 6a, 6b de conteneur sont permutés et le verrouillage du dispositif s'opère automatiquement avec le second bras 10 qui est verrouillé sur le socle 15, le premier bras d'actionnement 9 étant libre dans le coin opposé au socle 15 par rapport à l'axe X-X. L'opération de rotation du plateau 5 consistant à repermuter les emplacements 6a, 6b de conteneur, s'effectuera comme décrit précédemment et illustré avec les figures 6A à 6E avec le second bras d'actionnement 10 en position initiale au-dessus du socle 15.

Pour chacune des positions du plateau 5, les bras 9 et 10 peuvent être ramenés le long du plateau 5, pour un encombrement minimal. '

Ainsi, le dispositif 1 mis en oeuvre selon l'invention permet par un même mouvement de rotation du bras d'actionnement, dans un premier temps, le déverrouillage du dispositif, et dans un second temps, la mise en mouvement du plateau par rapport à l'embase.

L'utilisation de l'effet de levier d'un des deux bras 9, 10 contre le socle 15 lors de la phase de décollement permet sans alimentation pneumatique ou électrique de réduire la force nécessaire pour actionner le bras et apporte donc une solution ergonomique au déplacement des conteneurs le long d'une chaîne de montage.

La rotation du plateau 5 est réalisée par un opérateur positionné toujours du côté où est disposé le socle 15, par exemple en face du poste de travail ou de la zone d'approvisionnement. Ainsi, l'utilisation de deux bras d'actionnement 9 et 10 symétriques par rapport à l'axe X-X permet d'effectuer cette opération à partir du même point.

En variante, le dispositif comprend un seul bras d'actionnement et deux socles opposés, c'est-à-dire symétriques par rapport à l'axe X-X. Dans cette variante, l'opérateur effectue l'opération avec le même bras d'actionnement en position initiale, le bras est verrouillé sur le premier socle. Après rotation du plateau 5 selon le mécanisme décrit précédemment, le bras se verrouille sur le second socle. Ainsi, pour effectuer une seconde rotation du plateau 5, l'opérateur agit sur le bras au niveau du second socle.

## Revendications

1. Dispositif (1) d'aide à la rotation d'au moins un conteneur du type comprenant un plateau (5) mobile par rapport à une embase (21), au moins un bras (9, 10) d'actionnement manuel lié au plateau (5), **caractérisé en ce que**
- l'embase (21) comprend au moins un socle (15) ;
- le bras (9, 10) est articulé par rapport au plateau (5) autour d'un axe (A-A) ;
- le bras (9, 10) comprend un organe formant levier (63), s'étendant sensiblement dans un plan transversal à l'axe (A-A), ledit organe formant levier (63) étant solidaire en rotation du bras (9, 10) ; et
- l'organe formant levier (63) est propre à coopérer avec le socle (15) formant appui dudit organe (63).

2. Dispositif (1) selon la revendication 1, **caractérisé en ce que** le socle (15) comprend une rampe (85) de décollement, l'organe formant levier (63) étant adapté pour être déplacé entre une première position et une deuxième position angulaires décalées en coulissant le long de la rampe de décollement (85), en appui contre la rampe (85).

3. Dispositif (1) selon l'une quelconque des revendications 1 et 2, **caractérisé en ce que** l'organe formant levier (63) comprend à son extrémité un galet (64) de décollement adapté pour coulisser le long du socle d'appui (15), en appui contre la rampe (85).

4. Dispositif (1) selon l'une quelconque des revendications précédentes, **caractérisé en ce que** le bras (9, 10) comprend un pêne (57) de verrouillage, l'embase (21) comprend une gâche (91) de coincement du pêne (57), le pêne étant déplaçable par rapport à l'embase (21) entre une position engagée dans la gâche (91) et une position escamotée hors de la gâche (91).

5. Dispositif (1) selon la revendication 4, **caractérisé en ce que** le bras (9, 10) comprend un ressort (59) adapté pour presser le pêne de verrouillage (57) vers la gâche de coincement du pêne (91).

6. Dispositif (1) selon la revendication 4 ou 5, **caractérisé en ce que** le bras (9, 10) comprend des moyens de guidage (61, 79) du pêne (57) par rapport l'embase (21) adaptés pour permettre, par un mouvement de rotation du bras (9, 10), le déplacement du pêne (57) entre la position engagée dans la gâche (91) et la position escamotée hors de la gâche (91).

7. Dispositif (1) selon la revendication 6, **caractérisé en ce qu'**il comprend un palier (39) solidaire du plateau (5) et dans lequel le bras (9, 10) est monté rotatif, et **en ce que** les moyens de guidage (61, 79) comprennent un pion (61) de déverrouillage solidaire d'un premier élément parmi le palier (39) et le pêne (57), et une surface de came (79) délimitée dans le second élément parmi le palier (39) et le pêne (57), le pion (61) étant coulissant sur la surface de came (79).

8. Dispositif (1) selon la revendication 7, **caractérisé en ce que** le bras (9, 10) comprend un moyeu (55) et une broche axiale (53), le moyeu étant solidaire de la branche (33) d'actionnement du bras, rotatif dans le palier (39) selon l'axe (A-A) du bras (9, 10) et percé d'une fente (80) rectiligne allongée s'étendant selon une génératrice parallèle à l'axe (A-A), la broche (53) étant coulissante axialement dans le moyeu (55) et solidaire du pêne de verrouillage (57), le pion de déverrouillage (61) étant fixé sur la broche (53) et faisant saillie radialement par la fente (80) du moyeu (55).

9. Dispositif (1) selon la revendication 7 ou 8, **caractérisé en ce que** le palier (39) est adapté pour autoriser pour chaque position du plateau (5) une position du bras d'actionnement (9, 10) repliée le long du plateau (5).

10. Dispositif (1) selon l'une quelconque des revendications 4 à 9, **caractérisé en ce que** le bras (9, 10) est adapté pour permettre par un même mouvement de rotation, dans une première phase de la rotation, le déverrouillage du pêne (57), puis dans une deuxième phase de la rotation, le déplacement du plateau (5) par rapport à l'embase (21).

11. Dispositif (1) selon l'une quelconque des revendications précédentes, **caractérisé en ce que** le plateau de support (5) comprend une butée d'appui (93) du bras d'actionnement (9, 10) dans une position du bras (9, 10) écartée par rapport au plateau (5).

12. Dispositif (1) selon l'une quelconque des revendications précédentes, **caractérisé en ce que** le plateau (5) est rotatif selon un axe de rotation (X-X) perpendiculaire au plan général du plateau (5).

13. Dispositif (1) selon l'une quelconque des revendications précédentes, **caractérisé en ce qu'**il comprend deux bras (9, 10) d'actionnement manuel du plateau (5) montés symétriques par rapport au plateau (5).

## Claims

1. Auxiliary device (1) for rotating at least one container, of the type comprising a platform (5) that is movable relative to a base (21), and at least one manual actuating arm (9, 10) connected to the platform (5), said device being **characterized in that**:
• the base (21) comprises at least one foot (15);
• the arm (9, 10) pivots relative to the platform (5) about an axis (A-A);
• the arm (9, 10) comprises a lever member (63) extending generally in a plane at right angle to the axis (A-A), said lever member (63) being coupled in rotation to the arm (9, 10); and
• the lever member (63) is suitable for interacting with the foot (15) which forms a bearing surface for said member (63).

2. Device (1) according to Claim 1, **characterized in that** the foot (15) comprises a motion starter ramp (85), the lever member (63) being designed to be moved between two separate angular positions, a first position and a second position, by sliding along the motion starter ramp (85), pressing as it does so against the ramp (85).

3. Device (1) according to either of Claims 1 and 2, **characterized in that** the lever member (63) comprises at its end a motion starter roller (64) designed to slide along the bearing foot (15), pressing as it does so against the ramp (85).

4. Device (1) according to any one of the preceding claims, **characterized in that** the arm (9, 10) comprises a locking bolt (57), the base (21) comprises a strike (91) for holding the bolt (57), the bolt being movable relative to the base (21) between an engaged position in the strike (91) and a retracted position out of the strike (91).

5. Device (1) according to Claim 4, **characterized in that** the arm (9, 10) comprises a spring (59) designed to press the locking bolt (57) towards the holding strike of the bolt (91).

6. Device (1) according to Claim 4 or 5, **characterized in that** the arm (9, 10) comprises guide means (61, 79) for guiding the bolt (57) relative to the base (21), said means being designed to allow, by a rotational movement of the arm (9, 10), movement of the bolt (57) between the engaged position in the strike (91) and the retracted position out of the strike (91).

7. Device (1) according to Claim 6, **characterized in that** it comprises, connected to the platform (5), a bearing (39) in which the arm (9, 10) mounted rotationally, and **in that** the guide means (61, 79) comprise a release pin (61) connected to either of the bearing (39) for the bolt (57), and a cam surface defined in either the bolt (57) or the bearing (39), respectively, which pin (61) slides on the cam surface (79).

8. Device (1) according to Claim 7, **characterized in that** the arm (9, 10) comprises a hub (55) and an axial spindle (53), the hub being connected to the arm actuating leg (33), being rotational in the bearing (39) about the axis (A-A) of the arm (9, 10), and being interrupted by a long straight slot (80) extending along a generatrix parallel to the axis (A-A), the spindle (53) sliding axially in the hub (55) and being connected to the locking bolt (57), and the release pin (61) being fixed to the spindle (53) and projecting radially through the slot (80) in the hub (55).

9. Device (1) according to Claim 7 or 8, **characterized in that** the bearing (39) is designed to allow, for each position of the platform (5), a position of the actuating arm (9, 10) alongside the platform (5).

10. Device (1) according to any one of Claims 4 to 9, **characterized in that** the arm (9, 10) is so designed that a single movement of rotation allows the bolt (57) to be released in a first phase of the rotation, and then the platform (5) to be moved relative to the base (21) in a second phase of the rotation.

11. Device (1) according to any one of the preceding claims, **characterized in that** the supporting platform (5) comprises an end stop (93) for the actuating arm (9, 10) when the arm (9, 10) is away from the platform (5).

12. Device (1) according to any one of the preceding claims, **characterized in that** the platform (5) rotates about an axis of rotation (X-X) perpendicular to the general plane of the platform (5).

13. Device (1) according to any one of the preceding claims, **characterized in that** it comprises, mounted symmetrically about the platform (5), to manual platform (5)-actuating arms (9, 10).

## Patentansprüche

1. Hilfsvorrichtung (1) zum Drehen mindestens eines Behälters, des Typs, die eine in Bezug zu einer Grundplatte (21) bewegliche Platte (5), mindestens einen manuellen Betätigungsarm (9, 10), der mit der Platte (5) verbunden ist, aufweist, **dadurch gekennzeichnet, dass**
- die Grundplatte (21) mindestens einen Sockel (15) aufweist;
- der Arm (9, 10) in Bezug zu der Platte (5) um eine Achse (A-A) angelenkt ist;
- der Arm (9, 10) ein Organ (63) aufweist, das einen Hebel (63) bildet, der sich im Wesentlichen in einer Ebene quer zu der Achse (A-A) erstreckt, wobei das einen Hebel bildende Organ (63) in Drehung fest mit dem Arm (9, 10) verbunden ist; und
- das einen Hebel bildende Organ (63) mit dem Sockel (15), der eine Auflage des Organs (63) bildet, zusammenwirken kann.

2. Vorrichtung (1) nach Anspruch 1, **dadurch gekennzeichnet, dass** der Sockel (15) eine Abheberampe (85) aufweist, wobei das einen Hebel bildende Organ (63) zwischen einer ersten und einer zweiten Position, die winkelig versetzt sind, bewegt werden kann, indem er entlang der Abheberampe (85) in Auflage gegen die Rampe (85) gleitet.

3. Vorrichtung (1) nach einem der Ansprüche 1 und 2, **dadurch gekennzeichnet, dass** das einen Hebel bildende Organ (63) an seinem Ende eine Abhebewalze (64) aufweist, die entlang des Auflagesockels (15) in Auflage gegen die Rampe (85) gleiten kann.

4. Vorrichtung (1) nach einem der vorhergehenden Ansprüche, **dadurch gekennzeichnet, dass** der Arm (9, 10) einen Verriegelungsriegel (57) aufweist, die Grundplatte (21) einen Haken (91) zum Verklemmen des Riegels (57) aufweist, wobei der Riegel in Bezug zu der Grundplatte (21) zwischen einer in den Haken (91) eingefügten Position und einer aus dem Haken (91) herausgezogenen Position beweglich ist.

5. Vorrichtung (1) nach Anspruch 4, **dadurch gekennzeichnet, dass** der Arm (9, 10) eine Feder (59) aufweist, die den Verriegelungsriegel (57) zu dem Klemmhaken des Riegels (91) drücken kann.

6. Vorrichtung (1) nach Anspruch 4 oder 5, **dadurch gekennzeichnet, dass** der Arm (9, 10) Führungsmittel (61, 79) des Riegels (57) in Bezug zu der Grundplatte (21) aufweist, die durch eine Drehbewegung des Arms (9, 10) das Bewegen des Riegels (57) zwischen der in den Haken (91) eingefügten Position und der aus dem Haken (91) herausgezogenen Position erlauben können.

7. Vorrichtung (1) nach Anspruch 6, **dadurch gekennzeichnet, dass** sie ein Lager (39), das fest mit der Platte (5) verbunden ist, und in das der Arm (9, 10) drehend montiert ist, aufweist, und dass die Führungsmittel (61, 79) einen Entriegelungsstift (61), der fest mit entweder dem Lager (39) oder dem Riegel (57) verbunden ist, aufweisen, sowie eine Nockenfläche (79), die in dem anderen Element, nämlich entweder dem Lager (39) oder dem Riegel (57) begrenzt ist, wobei der Stift (61) auf der Nockenfläche (79) gleitet.

8. Vorrichtung (1) nach Anspruch 7, **dadurch gekennzeichnet, dass** der Arm (9, 10) eine Nabe (55) und eine Axialspindel (53) aufweist, wobei die Nabe fest mit dem Betätigungsschenkel (33) des Arms verbunden ist, der in dem Lager (39) entlang der Achse (A-A) des Arms (9, 10) dreht und mit einem länglichen geradlinigen Schlitz (80) durchbohrt ist, der sich entlang einer Mantellinie parallel zu der Achse (A-A) erstreckt, wobei die Spindel (53) axial in der Nabe (55) gleitet und fest mit dem Verriegelungsriegel (57) verbunden ist, wobei der Entriegelungsstift (61) auf der Spindel (53) befestigt ist und radial durch den Schlitz (80) der Nabe (55) vorsteht.

9. Vorrichtung (1) nach Anspruch 7 oder 8, **dadurch gekennzeichnet, dass** das Lager (39) für jede Position der Platte (5) eine Position des Betätigungsarms (9, 10) entlang der Platte (5) zurückgeklappt gestatten kann.

10. Vorrichtung (1) nach einem der Ansprüche 4 bis 9, **dadurch gekennzeichnet, dass** der Arm (9, 10) durch eine gleiche Drehbewegung in einer ersten Drehphase das Verriegeln des Riegels (57), dann, in einer zweiten Drehphase, das Bewegen der Platte (5) in Bezug zu der Grundplatte (21) gestatten kann.

11. Vorrichtung (1) nach einem der vorhergehenden Ansprüche, **dadurch gekennzeichnet, dass** die Tragplatte (5) einen Auflageanschlag (93) des Betätigungsarms (9, 10) in einer Position des Arms (9, 10), die in Bezug zu der Platte (5) beabstandet ist, aufweist.

12. Vorrichtung (1) nach einem der vorhergehenden Ansprüche, **dadurch gekennzeichnet, dass** die Platte (5) gemäß einer Drehachse (X-X) senkrecht zu der allgemeinen Ebene der Platte (5) dreht.

13. Vorrichtung (1) nach einem der vorhergehenden Ansprüche, **dadurch gekennzeichnet, dass** sie zwei manuelle Betätigungsarme (9, 10) der Platte (5), die in Bezug zu der Platte (5) symmetrisch montiert sind, aufweist.
